# EUROPÄISCHE PATENTSCHRIFT

(11) **EP 2 671 711 B1**
(45) Veröffentlichungstag und Bekanntmachung des Hinweises auf die Patenterteilung: **01.04.2015**
(21) Anmeldenummer: 13167992.0
(22) Anmeldetag: 16.05.2013
(51) Int. Cl.: B29D 30/72, B29D 30/20, B29D 30/26, B29D 30/24

(54) **Verfahren zur Herstellung eines Fahrzeugreifens**
Method for producing a tyre for a vehicle
Procédé de fabrication d'un pneu de véhicule

(30) Priorität: 04.06.2012 DE 102012104826
(43) Veröffentlichungstag der Anmeldung: 11.12.2013
(73) Patentinhaber: Continental Reifen Deutschland GmbH, 30165 Hannover (DE)
(72) Erfinder: Thomfohrde, Claudia, 38542 Leiferde (DE); Kneussel, Ewald, 30890 Barsinghausen (DE); Kastens, Sven, 30890 Barsinghausen (DE); Gerighausen, Martin, 30890 Barsinghausen (DE); Linne, Stefan, 30900 Wedemark (DE)
(74) Vertreter: Widjaja, Wira

(56) Entgegenhaltungen:
- EP-A1- 1 216 814
- WO-A1-2011/145926
- JP-A- S5 842 444
- US-A1- 2009 133 809

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.
Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Bei den herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren. Ein Nachteil bei diesem herkömmlichen Verfahren besteht darin, dass bestimmte Reifenkonstruktionen nicht realisierbar sind.
Die WO 2011/145926 A1, EP 1 216 814 A1, JP S58 4244 A und US 2009/133809 A offenbaren bekannte Herstellungsverfahren für Reifen.

Der Erfindung liegt die Aufgabe zugrunde, ein verbessertes Verfahren zur Herstellung von Fahrzeugreifen bereitzustellen.
Durch das Vefahren sollen außerdem spezielle Reifenkonstruktionen realisierbar sein und die Zykluszeit zur Herstellung des Reifenrohlings optimiert werden.

Gelöst wird die Aufgabe gemäß Anspruch 1 dadurch, dass ein Verfahren mit folgenden Schritten eingesetzt wird: mit einem ersten und einem zweiten Reifenwulst
a) Fertigstellen einer Reifenkarkasse auf einer Karkasstrommel,
   wobei auf der Karkasstrommel keine Reifenaufbauteile in Form von Seitenwänden aufgelegt werden,
b) Abnahme der Reifenkarkasse von der Karkasstrommel mit einer Karkasstranfereinheit,
c) Verfahren der Karkasstransfereinheit mit der Reifenkarkasse zu einer Übergabeposition, wobei die Reifenkarkasse koaxial zu zwei Seitenwandtrommel mit jeweils einer aufgewickelten Seitenwand positioniert wird,
d) Expandieren der ersten Seitenwand-Trommel mit der ersten Seitenwand,
   wobei über die Expansionsbewegung die auf der ersten Seitenwand-Trommel anliegende erste Seitenwand mit der koaxial positionierten Reifenkarkasse im Bereich des ersten Reifenwulstes verbunden wird und
e) Expandieren der zweiten Seitenwand-Trommel mit der zweiten Seitenwand,
   wobei über die Expansionsbewegung die auf der zweiten Seitenwand-Trommel anliegende zweite Seitenwand mit der koaxial positionierten Reifenkarkasse im Bereich des zweiten Reifenwulstes verbunden wird,
f) Verfahren der Karkasstransfereinheit mit der Reifenkarkasse und den angebundenen Seitenwänden koaxial zu einer Bombiertrommel,
g) Übergabe der Reifenkarkasse von der Karkasstransfereinheit an die Bombiertrommel,
h) Wegfahren der Karkasstransfereinheit von der Bombiertrommel,
i) Bombieren der Reifenkarkasse mit den auf beiden Seiten angebundenen Seitenwänden,
   wobei die Seitenwände mit einem Hochschlagmittel seitlich an der Reifenkarkasse hochgeschlagen werden und die Reifenkarasse mit dem koaxial angeordneten Gürtel-Laufstreifen-Paket vereinigt wird,
j) Fertigstellen des Reifenrohlings mit einem konventionellen Herstellungsverfahren.

Ein Vorteil der Erfindung ist insbesondere darin zu sehen, dass durch das Verfahren auf einfache Weise ein Fahrzeugreifen hergestellt werden kann.

Das Verfahren ermöglicht ebenfalls die Herstellung von speziellen Reifenkonstruktionen, die mit den herkömmlichen Reifenaufbauverfahren bisher nicht möglich waren. Zu diesen speziellen Reifenkonstruktionen zählen insbesondere Reifenkonstruktionen mit einer sogenannten C-Lage, bei der die Karkasseinlage in einer bestimmten Art und Weise um den Wulstkern herum geschlagen wird und im Bereich des Reifengürtels endet. Diese Art der Reifenkonstruktion wird durch die erfindungsgemäße Reihenfolge der Verfahrensschritte nach Patentanspruch 1 ermöglicht. Bedeutend ist dabei, dass die Seitenwand nicht auf der Karkasstrommel appliziert wird, sondern erst auf der Bombiertrommel. Ein weiterer Vorteil besteht darin, dass die Zykluszeit zur Herstellung des Fahrzeugreifens bzw. Reifenrohlings insgesamt optimiert wird.

Die beiden Seitenwand-Trommeln sind weder mit der Karkasstrommel noch mit der Bombiertrommel gekoppelt. Dadurch beanspruchen diese Seitenwand-Trommeln keinen Platz im Bereich der Karkasstrommel oder der Bombiertrommel. Ein weiterer Vorteil besteht darin, dass durch diese Anordnung die Bewegungen der Seitenwand-Trommeln besser gesteuert werden können.

In einer vorteilhaften Weiterbildung der Erfindung ist vorgesehen, dass vor Schritt c) die Seitenwände auf der ersten und zweiten Seitenwand-Trommel (1) vorkonfektioniert werden. Dadurch wird die Zykluszeit zur Herstellung des Reifenrohlings insgesamt verkürzt.

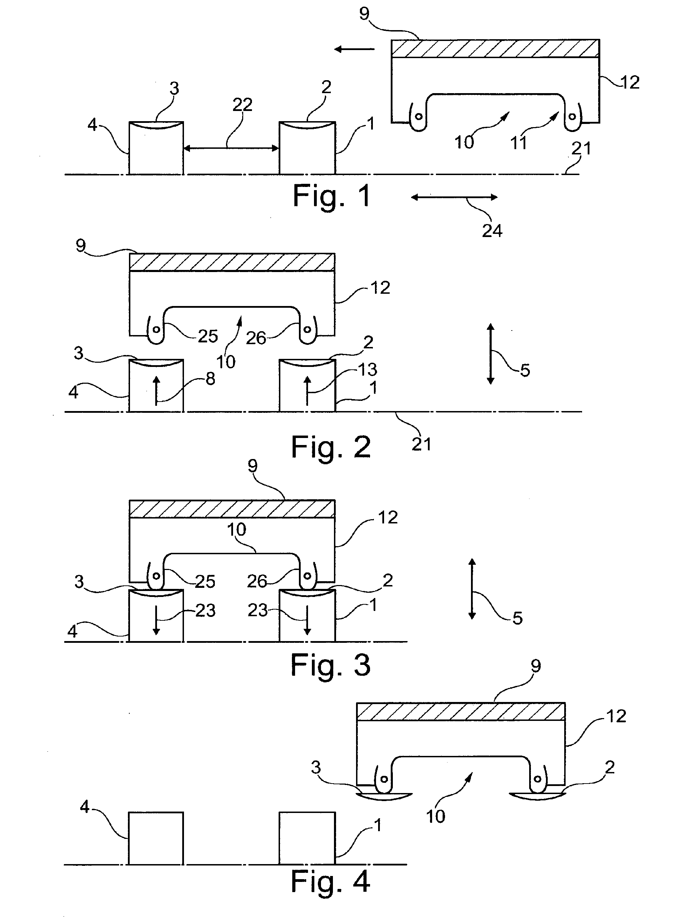

In einer weiteren vorteilhaften Weiterbildung der Erfindung ist vorgesehen, dass die Schritte d) und e) gleichzeitig erfolgen, wodurch beide Seitenwände gleichzeitig an die Reifenwülsten der Reifenkarkasse angebunden werden.
Auf diese Weise wird die Zykluszeit wesentlich reduziert. Ein entsprechendes Ausführungsbeispiel zeigen die Figuren 1 bis 4.

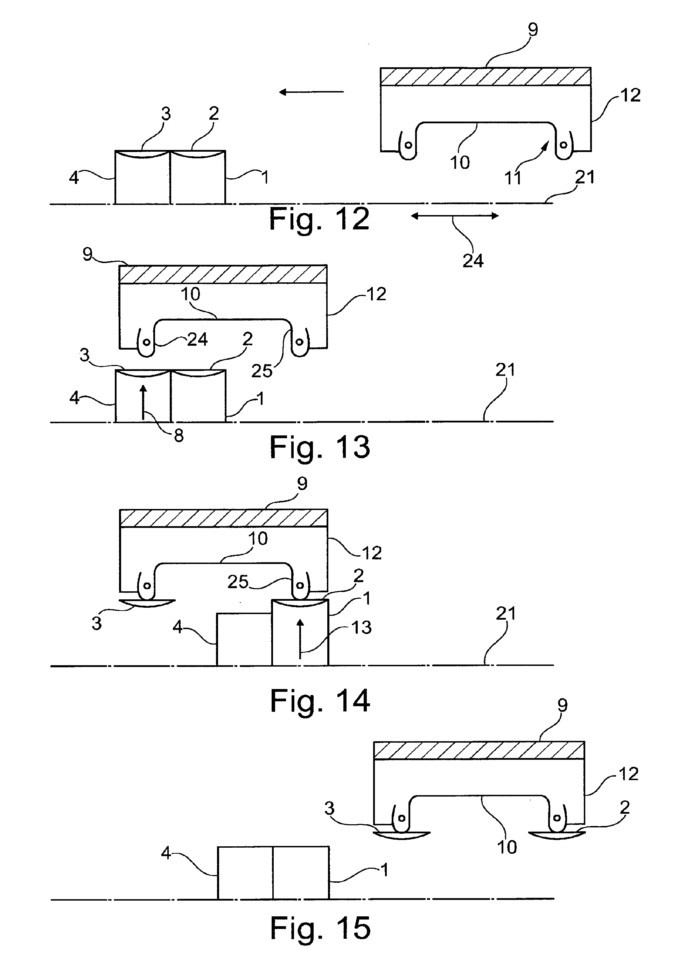

In einer weiteren vorteilhaften Weiterbildung der Erfindung ist vorgesehen, dass die Schritte d) und e) nacheinander erfolgen, wobei die Karkasstransfereinheit nach Schritt d) in eine zweite Übergabeposition koaxial zur zweiten Seitenwand-Trommel positioniert wird.
Bei dieser Ausführungsvariante werden die beiden Seitenwände nacheinander im Bereich des Reifenwulstes an der Reifenkarkasse angeordnet. Ein entsprechendes Ausführungsbeispiel ist in den Figuren 12 bis 15 dargestellt. Ein Vorteil bei dieser Ausführungsvariante ist, dass die Seitenwand-Trommel insgesamt weniger Bauraum beansprucht.

In einer weiteren vorteilhaften Weiterbildung der Erfindung ist vorgesehen, dass der Abstand der Seitenwandtrommel in axialer Richtung variabel einstellbar ist, wodurch die Schritte d) und e) gleichzeitig oder nacheinander erfolgen können. Dadurch können unterschiedliche Reifendimensionen hergestellt werden. Außerdem ist durch die Variabilität des Abstandes zwischen den Seitenwand-Trommeln sowohl die Ausführungsvariante nach den Figuren 1 bis 4 als auch die Ausführungsvariante nach den Figuren 12 bis 15 realisierbar.

In einer weiteren vorteilhaften Weiterbildung der Erfindung ist vorgesehen, dass bei Schritt d) und g) die Seitenwände über eine Dehnung in radialer Richtung mit der Reifenkarkasse verbunden werden.
Auf diese Weise erfolgt eine präzise Übergabe der Seitenwände an die Reifenkarkasse.

In einer weiteren vorteilhaften Weiterbildung der Erfindung ist vorgesehen, dass bei Schritt a) die Reifenkarkasse auf der Karkasstrommel mit einem Kern und einem Lagenumschlag vorkonfektioniert wird.
Auf diese Weise wird die Zykluszeit insgesamt reduziert. Die Reifenkarkasse mit Kernen und einem Lagenumschlag sind insbesondere in der Figur 1 dargestellt.

In einer weiteren vorteilhaften Weiterbildung der Erfindung ist vorgesehen, dass bei Schritt a) die Reifenkarkasse auf der Karkasstrommel in Form eines flachen Schlauches ohne einen Lagenumschlag vorkonfektioniert wird.

Bei dieser Variante erfolgt auf der Karkasstrommel kein Lagenumschlag. Die Reifenkarkasse wird in Form eines flachen Schlauches zu der Bombiertrommel transferiert. Der Lagenumschlag der Karkasseinlage erfolgt bei dieser Variante zusammen mit dem Hochschlagen der Seitenwände.

In einer weiteren vorteilhaften Weiterbildung der Erfindung ist vorgesehen, dass bei Schritt 1) die Seitenwand vor dem Transfer des Gürtel-Laufstreifen-Paketes über die Bombiertrommel hochgeschlagen wird.
Dadurch ist eine bestimmte Reifenkonstruktion realisierbar, bei der die Seitenwand unter dem Gürtel-Laufstreifen-Paket angeordnet werden kann.

In einer weiteren vorteilhaften Weiterbildung der Erfindung ist vorgesehen, dass bei Schritt 1) die Seitenwand nach dem Transfer des Gürtel-Laufstreifen-Paketes über die Bombiertrommel hochgeschlagen wird, wobei ein Teil der Seitenwand über dem Laufstreifen angeordnet werden kann.
Dadurch ist es möglich, den oberen Teil der Seitenwand über dem Gürtel-Laufstreifen-Paket anzuordnen.

In einer weiteren vorteilhaften Weiterbildung der Erfindung ist vorgesehen, dass auf den Seitenwandtrommeln außer der Seitenwand weitere Reifenaufbauteile appliziert werden. Als weitere Reifenaufbauteile kommen z. B. Wulstverstärker in Form von gummierten Textil- oder Stohrstahlkordlagen in Frage. Das Auflegen dieser weiteren Reifenaufbauteile auf der Seitenwandtrommel reduziert insgesamt die Zykluszeit.

In einer weiteren vorteilhaften Weiterbildung der Erfindung ist vorgesehen, dass die Hochschlagmittel an der Bombiertrommel in Form einer Vielzahl von Rollenhebeln ausgebildet sind.
Auf diese Weise werden die Seitenwände mit einer hohen Präzision und Schnelligkeit an der Reifenkarkasse hochgeschlagen.

Anhand mehrerer Ausführungsbeispiele soll die Erfindung näher erläutert werden. Es zeigen:
- Figuren 1 - 12:: ein Ausführungsbeispiel des Verfahrens,
- Figuren 13 - 15:: ein weiteres Ausführungsbeispiel.

Die Figur 1 zeigt die erste und zweite Seitenwandtrommel 1 und 4 in einer Radial-SchnittAnsicht, wobei nur die oberen Hälften der Trommeln dargestellt sind. Die Linie 21 stellt die axiale Symmetrielinie der Trommeln dar, zu der diese Trommeln rotationssymmetrisch aufgebaut sind. Auf den Seitenwandtrommel 1 und 4 werden vorab die linke Seitenwand 3 und die rechte Seitenwand 2 in Form von zwei separaten Ringen aufgewickelt. Auf der rechten Seite ist die Karkasstransfereinheit 9 mit der gehaltenen Reifenkarkasse 10 dargestellt. Die Reifenkarkasse 10 wurde in vorhergehenden Verfahrensschritten auf einer nicht dargestellten Karkasstrommel hergestellt. Bei diesem Ausführungsbeispiel besitzt die Reifenkarkasse 10 bereits einen Lagenumschlag 11 mit einem konventionellen Reifenkern. Die Reifenkarkasse 10 wird in beiden Bereichen des Reifenwulstes mit den Haltemitteln 12 der Karkasstransfereinheit 9 gehalten. Die Karkasstransfereinheit 9 befindet sich in einer Bewegung zu den beiden Seitenwand-Trommeln 1 und 4. Die beiden Seitenwand-Trommen 1 und 4 sind durch den Abstand 22 voneinander beabstandet, wobei dieser Abstand variabel einstellbar ist.

Die Figur 2 zeigt den Verfahrensschritt, bei dem die Karkasstransfereinheit 9 koaxial zu den beiden Seitenwand-Trommeln 1 und 4 positioniert worden ist. Der linke Wulst 25 ist so zur linken Seitenwand-Trommel 4 positioniert, dass die linke Seitenwand direkt unterhalb des linken Wulstes 25 liegt. Das gleiche gilt für die gegenüberliegende Seite mit dem rechten Wulst 26, der ebenfalls direkt über der rechten Seitenwand 2 koaxial positioniert wurde. Anschließend erfolgt ein radiales Expandieren 8 und 13 der rechten und linken Seitenwand-Trommel 1 und 4. Bei diesem Expansionsvorgang werden beide Seitenwände gleichzeitig im Bereich der Wülste 25 und 26 an die Reifenkarkasse 10 angebunden.

Die Figur 3 zeigt den Vorgang, bei dem die Seitenwand-Trommeln 1 und 4 in einem expandierten Zustand dargestellt sind. Beide Seitenwände 2 und 3 werden im Bereich der Wülste 25 und 26 mit der Reifenkarkasse 10 verbunden. Anschließend erfolgt ein Zusammenfahren 23 in radialer Richtung 5, wobei eine Freigabe der Seitenwände 2 und 3 erfolgt.

Die Figur 4 zeigt den Verfahrensschritt, bei dem sich die Seitenwand-Trommeln 1 und 4 bereits wieder in einem eingefahrenen Zustand befinden. Die Karkasstransfereinheit 9 verfährt die Reifenkarkasse 10 mit den beiden angebundenen Seitenwänden 2 und 3 zu einer Bombiertrommel. Anschließend wird die Reifenkarkasse 10 mit den beiden Seitenwänden 2 und 3 koaxial zur Bombiertrommel positioniert.

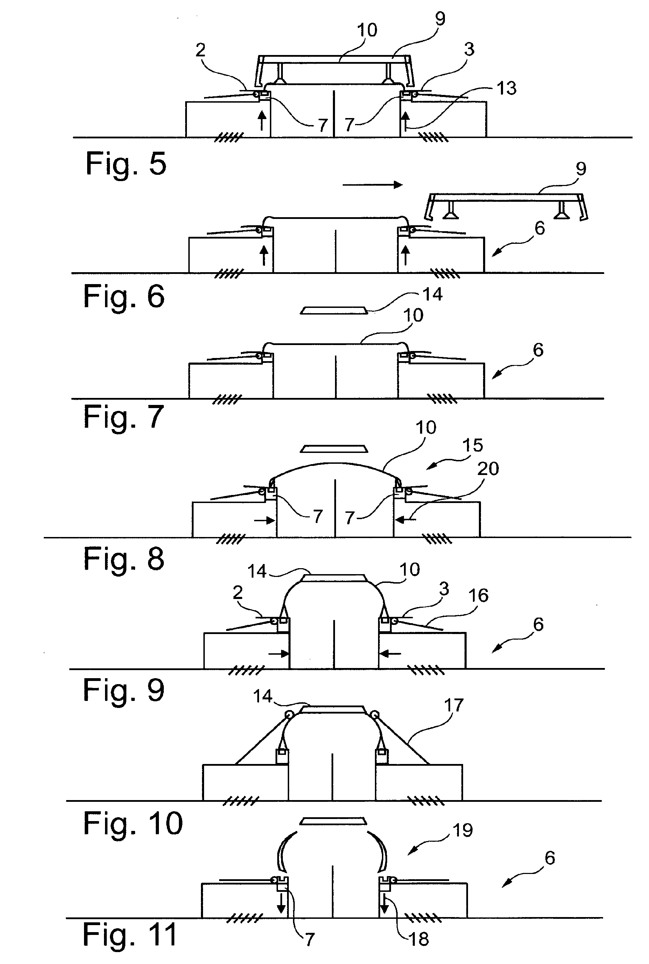

Die Figur 5 zeigt den Verfahrensschritt, bei dem die Segmente 7 der Bombiertrommel 6 in radialer Richtung 13 expandieren. Dadurch erfolgt eine Übergabe der Reifenkarkasse 10 mit den Seitenwänden 2 und 3 an die Bombiertrommel.

Die Figur 6 zeigt den Verfahrensschritt, bei dem die Karkasstransfer-Einheit 9 von der Bombiertrommel 6 wegverfahren wird.

Die Figur 7 zeigt den Verfahrensschritt, bei dem das Gürtel-Laufstreifen-Paket 14 koaxial zur Bombiertrommel 6 positioniert wird.

Die Figur 8 zeigt den Verfahrensschritt, bei dem der Bombiervorgang eingeleitet wird. Die beiden Segmente 7 fahren beim Bombiervorgang in axialer Richtung 20 aufeinander zu, wobei die Reifenkarkasse 10 entsprechend nach radial außen gewölbt wird.

Die Figur 9 zeigt die Vereinigung der Reifenkarkasse 10 mit dem koaxial angeordneten Gürtel-Laufstreifen-Paket 14. Bei diesem Verfahrensschritt befinden sich die Rollenhebel 16 der Bombiertrommel 6 noch in einer Warteposition.

Die Figur 10 zeigt den Verfahrensschritt, bei dem die Seitenwände bereits an der Reifenkarkasse entsprechend hochgeschlagen wurden. Dieses Hochschlagen der Seitenwände erfolgt mit den Rollenhebeln 17, die auseinanderspreizen und dabei die aufliegenden Seitenwände 2 und 3 an der Reifenkarkasse hochschlagen. Da das Gürtel-Laufstreifen-Paket 14 bereits mit der Reifenkarkasse 10 vereinigt wurden ist, kann der obere Teil der Seitenwände über das Gürtel-Laufstreifen-Paket 14 angeordnet werden.

Die Figur 11 zeigt den Verfahrensschritt, bei dem die Segmente 7 in radialer Richtung 18 einfahren. Der fertiggestellte Reifenrohling 19 wird bei diesem Schritt freigegeben und kann anschließend von der Bombiertrommel 6 entnommen werden. Die Fertigstellung des Fahrzeugreifens erfolgt anschließend mit einem herkömmlichen Verfahren. Bei einer nicht dargestellten Variante wird die Seitenwand vor dem Transfer des Gürtelstreifenpaketes über die Bombiertrommel hochgeschlagen. Dadurch ist es möglich, die oberen Teile der Seitenwand unterhalb des Gürtel-Laufstreifen-Paketes anzuordnen.

Die Figur 12 zeigt ein anderes Ausführungsbeispiel, bei dem die Seitenwand-Trommeln 1 und 4 direkt nebeneinander positioniert sind. Auch bei dieser Ausführungsvariante werden die beiden Seitenwände 2 und 3 vorab auf die dargestellten Seitenwand-Trommeln aufgewickelt. Die Karkasstransfereinheit 9 fährt mit der von einer Karkasstrommel abgegriffenen Reifenkarkasse 10 in Richtung der beiden Seitenwand-Trommeln 1 und 4.

Die Figur 13 zeigt den Verfahrensschritt, bei dem die Karkasstransfereinheit mit der Reifenkarkasse 10 und dem linken Wulst 24 koaxial zur linken Seitenwand-Trommel 4 positioniert wurde. Anschließend erfolgt ein Expandieren der Seitenwand-Trommel 4, wodurch die aufliegende Seitenwand 3 mit dem linken Wulst 24 der Karkasse 10 verbunden wird. Die rechte Seitenwand-Trommel 1 befindet sich zu diesem Zeitpunkt noch in einer Warteposition.

Die Figur 14 zeigt den Verfahrensschritt, bei dem die Karkasstransfereinheit 9 mit der Reifenkarkasse 10 koaxial zur rechten Seitenwand-Trommel 1 positioniert wurde. Anschließend expandiert die rechte Seitenwand-Trommel 1, wodurch die rechte

Seitenwand 2 mit dem rechten Wulst 25 der Reifenkarkasse 10 verbunden wird. Anschließend fährt die Seitenwand-Trommel 1 in radialer Richtung wieder zusammen und gibt dadurch die rechte Seitenwand 2 frei.

Die Figur 15 zeigt den Verfahrensschritt, bei dem die Karkasstransfereinheit 9 mit der Reifenkarkasse 10 und den beiden angebundenen Seitenwänden 2 und 3 zu einer Bombiertrommel verfahren wird. Anschließend erfolgt der Bombiervorgang und die Vereinigung mit dem Laufstreifen-Gürtel-Paket, wie er in den Figuren 5 bis 11 dargestellt ist.

### Bezugszeichenliste

### (ist Teil der Beschreibung)

- 1: Rechte bzw. erste Seitenwandtrommel
- 2: Rechte bzw. erste Seitenwand
- 3: Linke Seitenwand
- 4: Linke bzw. zweite Seitenwandtrommel
- 5: radiale Richtung
- 6: Bombiertrommel
- 7: Segmente für Kernklemmung
- 8: radiales Expandieren der Seitenwandtrommel
- 9: Karkasstransfer-Einheit
- 10: Reifenkarkasse mit Lagenumschlag
- 11: Lagenumschlag mit Kern
- 12: Haltemittel für Karkasstransfer-Einheit
- 13: radiales Expandieren der Seitenwandtrommel
- 14: Gürtel-Laufstreifen-Paket
- 15: Bombiervorgang
- 16: Rollenhebel
- 17: Rollenhebel beim Hochschlagen der Seitenwände
- 18: radiales Einfahren der Segmente
- 19: fertig gestellter Reifenrohling
- 20: axiales Zusammenfahren der Segmente beim Bombiervorgang
- 21: axiale Symmetrielinie
- 22: Abstand der Seitenwandtrommeln
- 23: radiales Einfahren der Seitenwandtrommeln
- 24: axiale Richtung
- 25: linker Wulst
- 26: rechter Wulst

## Patentansprüche

1. Verfahren zur Herstellung eines Fahrzeugreifens mit einer Reifenkarkasse (10), Reifenwülsten mit Kernen, einem Reifengürtel und einem Laufstreifen mit folgenden Schritten:
a) Fertigstellen einer Reifenkarkasse (10) mit einem ersten und einem zweiten Reifenwulst (25, 26) auf einer Karkasstrommel,
wobei auf der Karkasstrommel keine Reifenaufbauteile in Form von Seitenwänden (2, 3) aufgelegt werden,
b) Abnahme der Reifenkarkasse (10) von der Karkasstrommel mit einer Karkasstranfereinheit (9),
c) Verfahren der Karkasstransfereinheit (9) mit der Reifenkarkasse (10) zu einer Übergabeposition,
wobei die Reifenkarkasse (10) koaxial zu zwei Seitenwand-Trommeln (1, 4) mit jeweils einer aufgewickelten Seitenwand (2, 3) positioniert wird,
d) Expandieren der ersten Seitenwand-Trommel (4) mit der ersten Seitenwand (3), wobei über die Expansionsbewegung (8) die auf der ersten Seitenwand-Trommel (4) anliegende erste Seitenwand (3) mit der koaxial positionierten Reifenkarkasse (10) im Bereich des ersten Reifenwulstes (25) verbunden wird und
e) Expandieren der zweiten Seitenwand-Trommel (1) mit der zweiten Seitenwand (2), wobei über die Expansionsbewegung (13) die auf der zweiten Seitenwand-Trommel (1) anliegende zweite Seitenwand (2) mit der koaxial positionierten Reifenkarkasse (10) im Bereich des zweiten Reifenwulstes (26) verbunden wird,
f) Verfahren der Karkasstransfereinheit (9) mit der Reifenkarkasse (10) und den angebundenen Seitenwänden (2, 3) koaxial zu einer Bombiertrommel (6),
g) Übergabe der Reifenkarkasse (10) von der Karkasstransfereinheit (9) an die Bombiertrommel (6),
h) Wegfahren der Karkasstransfereinheit (9) von der Bombiertrommel (6),
i) Bombieren der Reifenkarkasse (10) mit den auf beiden Seiten angebundenen Seitenwänden (2, 3),
wobei die Seitenwände (2, 3) mit einem Hochschlagmittel (16) seitlich an der Reifenkarkasse (10) hochgeschlagen werden und die Reifenkarasse (10) mit dem koaxial angeordneten Gürtel-Laufstreifen-Paket (14) vereinigt wird,
j) Fertigstellen des Reifenrohlings (19) mit einem konventionellen Herstellungsverfahren.

2. Verfahren nach Anspruch 1,
**dadurch gekennzeichnet, dass**
die Schritte d) und e) gleichzeitig erfolgen, wodurch beide Seitenwände (2, 3) gleichzeitig an die Reifenwülsten (25, 26) der Reifenkarkasse (10) angebunden werden.

3. Verfahren nach einem der vorhergehenden Ansprüche,
**dadurch gekennzeichnet, dass**
die Schritte d) und e) nacheinander erfolgen, wobei die Karkasstransfereinheit (9) nach Schritt d) in eine zweite Übergabeposition koaxial zur zweiten Seitenwand-Trommel (1) positioniert wird.

4. Verfahren nach einem der vorhergehenden Ansprüche,
**dadurch gekennzeichnet, dass**
der Abstand (22) der Seitenwand-Trommeln (1, 4) in axialer Richtung (24) variabel einstellbar ist, wodurch die Schritte d) und e) gleichzeitig oder nacheinander erfolgen können.

5. Verfahren nach einem der vorhergehenden Ansprüche,
**dadurch gekennzeichnet, dass**
bei Schritt d) und e) die Seitenwände (2, 3) über eine Dehnung in radialer Richtung (8) mit der Reifenkarkasse (10) verbunden werden.

6. Verfahren nach einem der vorhergehenden Ansprüche,
**dadurch gekennzeichnet, dass**
bei Schritt a) die Reifenkarkasse (10) auf der Karkasstrommel mit einem Kern und einem Lagenumschlag (11) vorkonfektioniert wird.

7. Verfahren nach einem der vorhergehenden Ansprüche,
**dadurch gekennzeichnet, dass**
bei Schritt a) die Reifenkarkasse auf der Karkasstrommel in Form eines flachen Schlauches ohne einen Lagenumschlag vorkonfektioniert wird.

8. Verfahren nach einem der vorhergehenden Ansprüche,
**dadurch gekennzeichnet, dass**
bei Schritt i) die Seitenwand (2, 3) vor dem Transfer des Gürtel-Laufstreifen-Paketes (14) über die Bombiertrommel (6) hochgeschlagen wird.

9. Verfahren nach einem der vorhergehenden Ansprüche,
**dadurch gekennzeichnet, dass**
bei Schritt i) die Seitenwand (2, 3) nach dem Transfer des Gürtel-Laufstreifen-Paketes (14) über die Bombiertrommel (6) hochgeschlagen wird, wobei ein Teil der Seitenwand über dem Laufstreifen angeordnet werden kann.

10. Verfahren nach einem der vorhergehenden Ansprüche,
**dadurch gekennzeichnet, dass**
auf der Seitenwand-Trommel (1) außer der Seitenwand (2, 3) weitere Reifenaufbauteile appliziert werden.

11. Verfahren nach einem der vorhergehenden Ansprüche,
**dadurch gekennzeichnet, dass**
die Hochschlagmittel (16) an der Bombiertrommel (6) in Form einer Vielzahl von Rollenhebeln (16) ausgebildet sind.

## Claims

1. Method for producing a vehicle tyre comprising a tyre carcass (10), tyre beads with cores, a tyre breaker belt and a tread rubber, with the following steps:
a) producing a tyre carcass (10), comprising a first and a second tyre bead (25, 26), on a carcass drum,
no tyre building parts in the form of sidewalls (2, 3) being placed on the carcass drum,
b) removing the tyre carcass (10) from the carcass drum by means of a carcass transfer unit (9),
c) moving the carcass transfer unit (9) with the tyre carcass (10) to a transfer position,
the tyre carcass (10) being positioned coaxially in relation to two sidewall drums (1, 4) each with a wound-up sidewall (2, 3),
d) expanding the first sidewall drum (4) with the first sidewall (3), the expansion movement (8) having the effect that the first sidewall (3), lying on the first sidewall drum (4), is joined onto the coaxially positioned tyre carcass (10) in the region of the first tyre bead (25) and
e) expanding the second sidewall drum (1) with the second sidewall (2), the expansion movement (13) having the effect that the second sidewall (2), lying on the second sidewall drum (1), is joined onto the coaxially positioned tyre carcass (10) in the region of the second tyre bead (26),
f) moving the carcass transfer unit (9) with the tyre carcass (10) and the joined-on sidewalls (2, 3) coaxially in relation to a shaping drum (6),
g) transferring the tyre carcass (10) from the carcass transfer unit (9) to the shaping drum (6),
h) moving the carcass transfer unit (9) away from the shaping drum (6),
i) shaping the tyre carcass (10) with the sidewalls (2, 3) that are joined on both sides,
the sidewalls (2, 3) being turned up laterally on the tyre carcass (10) by a turning-up means (16) and the tyre carcass (10) being combined with the coaxially arranged breaker-belt/tread-rubber assembly (14),
j) completing the tyre blank (19) by a conventional production process.

2. Method according to Claim 1,
**characterized in that**
steps d) and e) are performed simultaneously, whereby both sidewalls (2, 3) are joined onto the tyre beads (25, 26) of the tyre carcass (10) simultaneously.

3. Method according to one of the preceding claims,
**characterized in that**
steps d) and e) are performed one after the other, the carcass transfer unit (9) being positioned after step d) in a second transfer position, coaxially in relation to the second sidewall drum (1).

4. Method according to one of the preceding claims,
**characterized in that**
the distance (22) between the sidewall drums (1, 4) in the axial direction (24) is variably adjustable, whereby steps d) and e) can be performed simultaneously or one after the other.

5. Method according to one of the preceding claims,
**characterized in that**
in steps d) and e), the sidewalls (2, 3) are joined onto the tyre carcass (10) by means of stretching in the radial direction (8).

6. Method according to one of the preceding claims,
**characterized in that**
in step a), the tyre carcass (10) is prefabricated on the carcass drum with a core and a ply turnup (11).

7. Method according to one of the preceding claims,
**characterized in that**
in step a), the tyre carcass is prefabricated on the carcass drum in the form of a flat tube without a ply turnup.

8. Method according to one of the preceding claims,
**characterized in that**
in step i), the sidewall (2, 3) is turned up by means of the shaping drum (6) before the transfer of the breaker-belt/tread-rubber assembly (14).

9. Method according to one of the preceding claims,
**characterized in that**
in step i), the sidewall (2, 3) is turned up by means of the shaping drum (6) after the transfer of the breaker-belt/tread-rubber assembly (14), it being possible for part of the sidewall to be arranged over the tread rubber.

10. Method according to one of the preceding claims,
**characterized in that**
apart from the sidewall (2, 3), further tyre building parts are applied to the sidewall drum (1).

11. Method according to one of the preceding claims,
**characterized in that** the turnup means (16) are formed on the shaping drum (6) in the form of a multiplicity of roller levers (16).

## Revendications

1. Procédé de fabrication d'un pneu de véhicule comprenant une carcasse de pneu (10), des talons de pneu avec des tringles, une ceinture de pneu et une bande de roulement, comprenant les étapes suivantes :
a) fabrication d'une carcasse de pneu (10) avec un premier et un deuxième talon de pneu (25, 26) sur un tambour de carcasse, aucune pièce de construction du pneu sous forme de parois latérales (2, 3) n'étant posée sur le tambour de carcasse,
b) enlèvement de la carcasse de pneu (10) du tambour de carcasse avec une unité de transfert de carcasse (9),
c) déplacement de l'unité de transfert de carcasse (9) avec la carcasse de pneu (10) jusqu'à une position de transfert,
la carcasse de pneu (10) étant positionnée coaxialement à deux tambours de paroi latérale (1, 4) avec à chaque fois une paroi latérale enroulée (2, 3),
d) expansion du premier tambour de paroi latérale (4) avec la première paroi latérale (3), la première paroi latérale (3) s'appliquant sur le premier tambour de paroi latérale (4) étant connectée par le biais du mouvement d'expansion (8) à la carcasse de pneu (10) positionnée coaxialement dans la région du premier talon de pneu (25) et
e) expansion du deuxième tambour de paroi latérale (1) avec la deuxième paroi latérale (2), la deuxième paroi latérale (2) s'appliquant sur le deuxième tambour de paroi latérale (1) étant connectée par le biais du mouvement d'expansion (13) à la carcasse de pneu (10) positionnée coaxialement dans la région du deuxième talon de pneu (26),
f) déplacement de l'unité de transfert de carcasse (9) avec la carcasse de pneu (10) et les parois latérales raccordées (2, 3) coaxialement à un tambour de bombement (6),
g) transfert de la carcasse de pneu (10) de l'unité de transfert de carcasse (9) au tambour de bombement (6),
h) écartement de l'unité de transfert de carcasse (9) du tambour de bombement (6),
i) bombement de la carcasse de pneu (10) avec les parois latérales (2, 3) raccordées des deux côtés,
les parois latérales (2, 3) étant relevées avec un moyen de relèvement (16) latéralement au niveau de la carcasse de pneu (10) et la carcasse de pneu (10) étant réunie au paquet de ceinture-bande de roulement (14) disposé coaxialement,
j) finition de l'ébauche de pneu (19) avec un procédé de fabrication conventionnel.

2. Procédé selon la revendication 1,
**caractérisé en ce que**
les étapes d) et e) s'effectuent simultanément, de sorte que les deux parois latérales (2, 3) soient raccordées simultanément aux talons de pneu (25, 26) de la carcasse de pneu (10).

3. Procédé selon l'une quelconque des revendications précédentes,
**caractérisé en ce que**
les étapes d) et e) s'effectuent l'une après l'autre, l'unité de transfert de carcasse (9) après l'étape d) étant positionnée dans une deuxième position de transfert coaxialement au deuxième tambour de paroi latérale (1).

4. Procédé selon l'une quelconque des revendications précédentes,
**caractérisé en ce que**
la distance (22) des tambours de paroi latérale (1, 4) peut être ajustée de manière variable dans la direction axiale (24), de sorte que les étapes d) et e) puissent s'effectuer simultanément ou l'une après l'autre.

5. Procédé selon l'une quelconque des revendications précédentes,
**caractérisé en ce que**
dans les étapes d) et e), les parois latérales (2, 3) sont connectées à la carcasse de pneu (10) par le biais d'une extension dans la direction radiale (8).

6. Procédé selon l'une quelconque des revendications précédentes,
**caractérisé en ce que**
dans l'étape a), la carcasse de pneu (10) est préconfectionnée sur le tambour de carcasse avec une tringle et un retournement de pli (11).

7. Procédé selon l'une quelconque des revendications précédentes,
**caractérisé en ce que**
dans l'étape a), la carcasse de pneu est préconfectionnée sur le tambour de carcasse sous la forme d'un tuyau plat sans retournement de pli.

8. Procédé selon l'une quelconque des revendications précédentes,
**caractérisé en ce que**
dans l'étape i), la paroi latérale (2, 3) est relevée par-dessus le tambour de bombement (6) avant le transfert du paquet de ceinture-bande de roulement (14).

9. Procédé selon l'une quelconque des revendications précédentes,
**caractérisé en ce que**
dans l'étape i), la paroi latérale (2, 3) est relevée par-dessus le tambour de bombement (6) après le transfert du paquet de ceinture-bande de roulement (14), une partie de la paroi latérale pouvant être disposée par-dessus la bande de roulement.

10. Procédé selon l'une quelconque des revendications précédentes,
**caractérisé en ce que**
d'autres pièces de construction de pneu en plus de la paroi latérale (2, 3) sont appliquées sur le tambour de paroi latérale (1).

11. Procédé selon l'une quelconque des revendications précédentes,
**caractérisé en ce que**
les moyens de relèvement (16) sont réalisés sur le tambour de bombement (6) sous la forme d'une pluralité de leviers à galets (16).
